# EUROPEAN PATENT APPLICATION

(11) **EP 4 576 336 A1**
(43) Date of publication of application: **25.06.2025**
(21) Application number: 23218591.8
(22) Date of filing: 20.12.2023
(51) Int. Cl.: H01M 10/625

(54) **A BATTERY MODULE, A BATTERY PACK, AND A VEHICLE**

(71) Applicant: VOLVO TRUCK CORPORATION, 405 08 Göteborg (SE)
(72) Inventor: Rout, Dhirendra, 422 54 Göteborg (SE); Irannezhad, Mike, 411 20 Göteborg (SE); Lindelöw, Fredrik, 541 94 Skövde (SE); Jonsson, Kasper, 417 57 Göteborg (SE)
(74) Representative: Kransell & Wennborg KB

(57) **Abstract**

A battery module (1) for a battery pack (100) is disclosed, comprising:
- a plurality of battery cells (2), comprising at least one group of stacked prismatic battery cells (21-24) which are stacked next to each other in the longitudinal direction (L),
- a first and a second separate longitudinally extending beam member (31, 32) being offset from each other in the width direction (W),
- a plurality of separate crossbeam members (41-45) which are offset from each other in the longitudinal direction (L), wherein each crossbeam member extends in the width direction (W) and wherein the plurality of separate crossbeam members (41-45) mechanically connects the first and second separate longitudinally extending beam members (31, 32) together,
- a cooling plate bottom member (5), provided at a bottom portion of the first and second separate longitudinally extending beam members (31, 32) and the plurality of separate crossbeam members (41-45).

## Description

### TECHNICAL FIELD

The disclosure relates generally to energy storage systems. In particular aspects, the disclosure relates to a battery module, a battery pack, and a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A battery pack typically comprises a plurality of battery cells, i.e., electrochemical battery cells, which are electrically connected in series and/or in parallel. The battery pack may comprise one or more separate battery modules, wherein each module comprises a stack of battery cells. The battery cells may be prismatic battery cells.

Due to the electrification trend, such as for vehicles, there is an ongoing strive to develop improved technology relating to battery packs and battery modules, such as to provide cost-effective configurations which are reliable, robust and/or space efficient.

### SUMMARY

According to a first aspect of the disclosure, a battery module for a battery pack is provided. The battery module has a longitudinal extension in a longitudinal direction, a width extension in a width direction and a height extension in a height direction. The battery module comprises:
- a plurality of battery cells, comprising at least one group of stacked prismatic battery cells which are stacked next to each other in the longitudinal direction,
- a first and a second separate longitudinally extending beam member being offset from each other in the width direction,
- a plurality of separate crossbeam members which are offset from each other in the longitudinal direction, wherein each crossbeam member extends in the width direction and wherein the plurality of separate crossbeam members mechanically connects the first and second separate longitudinally extending beam members together,
- a cooling plate bottom member, provided at a bottom portion of the first and second separate longitudinally extending beam members and the plurality of separate crossbeam members, as seen in the height direction, wherein the cooling plate bottom member is mechanically connected to the first and second separate longitudinally extending beam members and/or to the plurality of separate crossbeam members,

wherein the first and second separate longitudinally extending beam members, the plurality of separate crossbeam members and the cooling plate bottom member form at least one receiving space for the at least one group of stacked prismatic battery cells, and
wherein the at least one group of stacked prismatic battery cells are at least partly supported on the cooling plate bottom member, forming a load bearing surface for the at least one group of stacked prismatic battery cells. The first aspect of the disclosure may seek to provide a space-efficient, reliable and robust battery module which is easily scalable. A technical benefit may include that a scalable configuration is achieved in a cost-effective manner. The scalable configuration may require fewer parts since the cooling plate bottom member is not only used for cooling the battery cells but also for supporting the battery cells.

Optionally in some examples, including in at least one preferred example, the at least one group of stacked prismatic battery cells is a group of stacked prismatic side terminal battery cells which are stacked next to each other in the longitudinal direction with side terminals thereof facing in a first direction corresponding to the width direction and/or in a second direction which is opposite to the first direction. A technical benefit may include a favorable position of the terminals, allowing the battery module to be more compact in the height direction. This in turn may be beneficial if e.g. stacking several battery modules on top of each other. A prismatic side terminal battery cell as used herein means an electrochemical battery cell comprising a prismatic cell housing and terminals on the cell housing, i.e., electrical connections, which are provided on opposite outer ends of the cell housing, as seen along a longitudinal extension of the battery cell.

Optionally in some examples, including in at least one preferred example, the battery cells of the at least one group of stacked prismatic battery cells are fixed to each other by at least one strap which is wrapped around the group of stacked prismatic battery cells. A technical benefit may include a cost-effective and compact way of stacking the battery cells together. For example, the at least one strap may be wrapped around an axis which corresponds to the width direction. A technical benefit may include improved access to terminals of the plurality of battery cells.

Optionally in some examples, including in at least one preferred example, the cooling plate bottom member is mechanically connected to at least one crossbeam member within the plurality of separate crossbeam members by one or more fasteners and/or by one or more welds distributed along the width direction. A technical benefit may include that a risk of deflection of the cooling plate member caused by the load from the battery cells can be mitigated.

Optionally in some examples, including in at least one preferred example, the battery module has a first maximum height and at least one of the first and second separate longitudinally extending beam members has a second maximum height, as measured in the height direction, wherein the second maximum height of the at least one of the first and second separate longitudinally extending beam members is lower than the first maximum height of the battery module. A technical benefit may include that the side terminals are more easily accessible from the side of the battery module.

Optionally in some examples, including in at least one preferred example, the at least one of the first and second separate longitudinally extending beam members is provided proximate, such as in abutment with, the cooling plate bottom member. A technical benefit may include that a more well-defined receiving space is achieved for the at least one group of stacked prismatic battery cells. This may result in a more robust configuration, and/or facilitated assembly/disassembly of the battery module.

Optionally in some examples, including in at least one preferred example, the at least one of the first and second separate longitudinally extending beam members is attached to a respective corner portion of each crossbeam member within the plurality of crossbeam members. A technical benefit may include a more robust configuration.

Optionally in some examples, including in at least one preferred example, the battery module comprises more than one group of the at least one group of stacked prismatic battery cells, wherein the first and second separate longitudinally extending beam members, the plurality of separate crossbeam members and the cooling plate bottom member form a respective receiving space for each group of stacked prismatic battery cells. A technical benefit may include a robust configuration for a plurality of prismatic battery cells which is easily scalable in the longitudinal direction.

Optionally in some examples, including in at least one preferred example, at least two of the plurality of separate crossbeam members are identical. A technical benefit may include a more cost-effective configuration requiring fewer different parts. By identical may herein mean that the dimensions of the members are identical, and/or that any holes for fasteners are identical and/or placed at the same corresponding positions.

Optionally in some examples, including in at least one preferred example, the first and second separate longitudinally extending beam members are identical. A technical benefit may include a more cost-effective configuration requiring fewer different parts.

Optionally in some examples, including in at least one preferred example, the cooling plate bottom member comprises a coolant circuit configured to contain a coolant fluid. A technical benefit may include improved cooling of the plurality of prismatic battery cells. The coolant circuit may be fluidly connected to a fluid inlet and a fluid outlet for coolant fluid, wherein optionally the fluid inlet and/or outlet are located at an end portion of the battery module, as seen in the longitudinal direction.

Optionally in some examples, including in at least one preferred example, the battery module further comprises a top cover configured to cover the plurality of battery cells from above, as seen in the height direction. A technical benefit may include a more robust configuration, protecting the plurality of prismatic battery cells from above. The top cover may further be configured to provide structural rigidity to the battery module. A technical benefit may include a reduced risk of deflection of the battery module when e.g. lifting the battery module.

Optionally in some examples, including in at least one preferred example, the top cover is attached to the plurality of battery cells and/or to the plurality of separate crossbeam members by an adhesive, at least one fastener, and/or a weld.

Optionally in some examples, including in at least one preferred example, the battery module further comprises a thermal interface material between the cooling plate bottom member and the plurality of battery cells. A technical benefit may include improved heat transfer between the plurality of battery cells and the cooling plate bottom member.

According to a second aspect of the disclosure, a battery pack is provided. The battery pack comprises one or more battery modules according to any one of the examples of the first aspect of the disclosure. The second aspect of the disclosure may seek to provide a space-efficient, reliable and robust battery pack which is easily scalable. A technical benefit may include that a scalable configuration is achieved in a cost-effective manner. The scalable configuration may require fewer parts since the cooling plate bottom member is not only used for cooling the battery cells but also for supporting the battery cells. The directions of the battery pack correspond to the directions of the at least one battery module, i.e., the battery pack also has a longitudinal direction, a width direction and a height direction which are the same as the corresponding directions of the at least one battery module.

Optionally in some examples, including in at least one preferred example, the battery pack comprises at least two battery modules according to any one of the examples of the first aspect of the disclosure, wherein the at least two battery modules are arranged on top of each other, as seen in the height direction. A technical benefit may include a space-efficient and robust configuration, using the cooling plate bottom member of each battery module for load support of the plurality of battery cells.

According to a third aspect of the disclosure, a vehicle is provided. The vehicle comprises a battery module according to any one of the examples of the first aspect of the disclosure and/or a battery pack according to any one of the examples of the second aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle in a side view according to an example.
**FIG. 2** is an exemplary battery module in a perspective view according to an example.
**FIG. 3** is an exemplary battery module in a perspective view according to an example.
**FIG. 4** is an exemplary battery module in a perspective view according to an example.
**FIG. 5** is an exemplary battery module in a perspective view according to an example.
**FIG. 6** is an exemplary battery module in a perspective view according to an example.
**FIG. 7** is an exemplary battery pack in a side view according to an example.

The drawings are schematic and may not necessarily be drawn to scale. Like reference characters throughout the drawings refer to the same or similar element unless stated otherwise. Some reference characters in some of the drawings may have been omitted for the sake of clarity.

### DETAILED DESCRIPTION

The detailed description set forth below provides information and examples of the disclosed technology with sufficient detail to enable those skilled in the art to practice the disclosure.

An aim of the present disclosure is to provide a space-efficient, reliable and robust battery module which is easily scalable. An aim of the present disclosure is also to provide a scalable configuration which is cost-effective. Additionally, an aim of the present disclosure is to is to provide an improved battery module, battery pack, and/or vehicle, which at least partly alleviates one or more drawbacks of the prior art, or which at least is a suitable alternative.

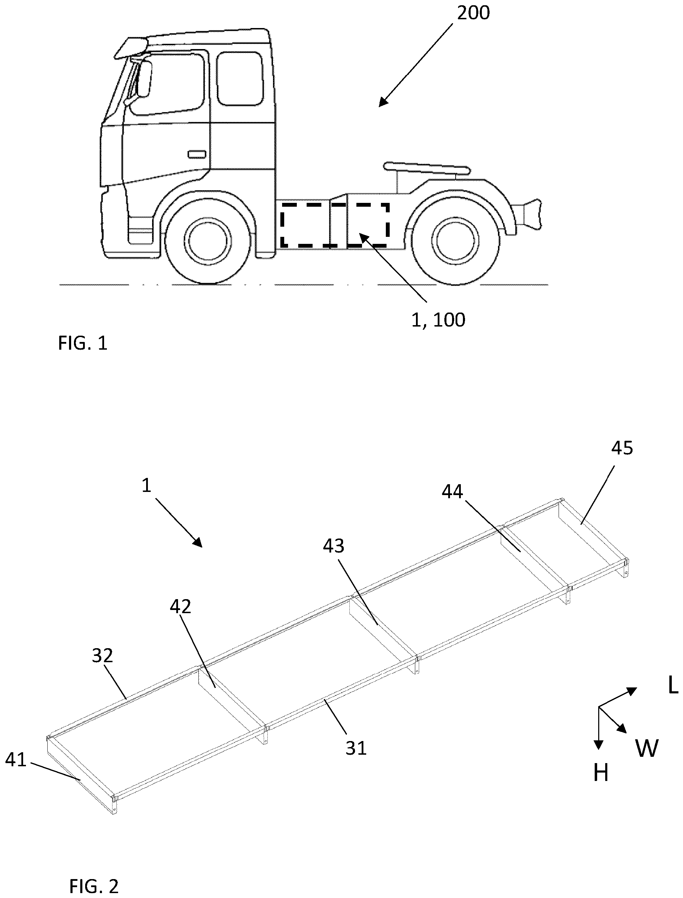

**FIG. 1** is an exemplary vehicle 200 in a side view according to an example. The vehicle 200 is in this example a truck, and more particularly a towing truck for towing one or more trailers (not shown). It shall however be noted that the vehicle may be any other type of vehicle, such as another type of truck, a bus, a passenger car, a marine vessel, or construction equipment, such as a wheel loader or an excavator. The vehicle 200 comprises a battery module 1 and a battery pack 100 according to an example disclosed herein. The battery pack 100 may at least partly be used for driving one or more electric motors (not shown) of the vehicle 200. The vehicle 200 may accordingly be an electric vehicle or a hybrid vehicle, i.e., a vehicle which at least partly uses electric power for propulsion. The battery module 1 and the battery pack 100 as disclosed herein may also be used in a stationary unit, such as a building and/or any stationary machinery.

**FIG. 2** is an exemplary battery module 1 in a perspective view according to an example. Some parts of the battery module 1 are omitted in FIG. 2. The battery module 1 has a longitudinal extension in a longitudinal direction L, a width extension in a width direction W and a height extension in a height direction H. In FIG. 2, the battery module 1 is shown in perspective view from below.

The battery module 1 comprises a first and a second separate longitudinally extending beam member 31, 32 which are offset from each other in the width direction W. For example, the first and second separate longitudinally extending beam members 31, 32 may be made of metal, such as aluminum, or by a polymer, such as a fiber reinforced polymer.

The battery module 1 further comprises a plurality of separate crossbeam members 41, 42, 43, 44, 45 which are offset from each other in the longitudinal direction L, wherein each crossbeam member extends in the width direction W and wherein the plurality of separate crossbeam members 41, 42, 43, 44, 45 mechanically connects the first and second separate longitudinally extending beam members 31, 32 together. In the shown example there are five crossbeam members. However, any number of two or more crossbeam members may be used. For example, the plurality of separate crossbeam members 41, 42, 43, 44, 45 may be made of metal, such as aluminum, or by a polymer, such as a fiber reinforced polymer.

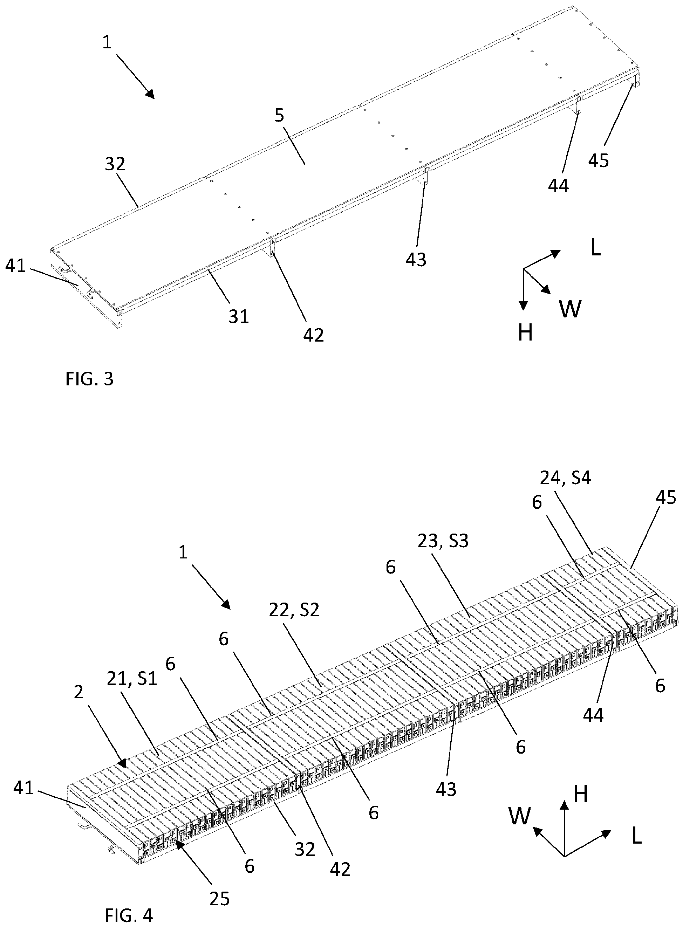

**FIG. 3** is an exemplary battery module 1 in a perspective view according to an example. Some parts of the battery module 1 are also omitted in FIG. 3. However, the battery module 1 in FIG. 3 is based on the battery module shown in FIG. 2.

With reference to FIG. 3, the battery module 1 further comprises a cooling plate bottom member 5, provided at a bottom portion of the first and second separate longitudinally extending beam members 31, 32 and the plurality of separate crossbeam members 41, 42, 43, 44, 45, as seen in the height direction H, wherein the cooling plate bottom member 5 is mechanically connected to the first and second separate longitudinally extending beam members 31, 32 and/or to the plurality of separate crossbeam members 41, 42, 43, 44, 45.

**FIG. 4** is an exemplary battery module 1 in a perspective view according to an example. The battery module 1 in FIG. 4 is based on the battery module shown in FIG. 2 and FIG. 3. However, FIG. 4 shows the battery module 1 in perspective view from above.

With reference to FIG. 4, the battery module 1 further comprises a plurality of battery cells 2, comprising at least one group of stacked prismatic battery cells 21, 22, 23, 24 which are stacked next to each other in the longitudinal direction L. In the shown example there are four groups 21, 22, 23, 24 of stacked prismatic battery cells 2.

The first and second separate longitudinally extending beam members 31, 32, the plurality of separate crossbeam members 41, 42, 43, 44, 45 and the cooling plate bottom member 5 form at least one receiving space S1, S2, S3, S4 for the at least one group of stacked prismatic battery cells 21, 22, 23, 24. In the shown example there are four receiving spaces S1-S4, one for each respective group of stacked prismatic battery cells. However, any number of one or more receiving spaces are conceivable.

The at least one group 21, 22, 23, 24 of stacked prismatic battery cells 2 are at least partly supported on the cooling plate bottom member 5, forming a load bearing surface for the at least one group 21, 22, 23, 24 of stacked prismatic battery cells 2. The cooling plate bottom member 5 may for example be made of a material such that it provides structural rigidity. For example, the cooling plate bottom member 5 may be made of a metal, such as aluminum, or a polymer, such as a fiber reinforced polymer.

As depicted in FIG. 4, the at least one group 21, 22, 23, 24 of stacked prismatic battery cells 2 may be a group of stacked prismatic side terminal battery cells which are stacked next to each other in the longitudinal direction L with side terminals 25 thereof facing in a first direction corresponding to the width direction W and/or in a second direction which is opposite to the first direction.

As further depicted in FIG. 4, the battery cells 2 of the at least one group 21, 22, 23, 24 of stacked prismatic battery cells 2 may be fixed to each other by at least one strap 6 which is wrapped around the group 21, 22, 23, 24 of stacked prismatic battery cells. As shown in FIG. 4, the at least one strap 6 may be wrapped around an axis which corresponds to the width direction W. As further shown, at least one group 21, 22, 23, 24 of stacked prismatic battery cells 2 may be fixed to each other by more than one strap 6, e.g., by two straps 6 which are offset from each other in the width direction W. A strap as used herein shall be interpreted as a flexible, and/or bendable, elongated member which is configured to be wrapped around a plurality of battery cells for fixing the battery cells together.

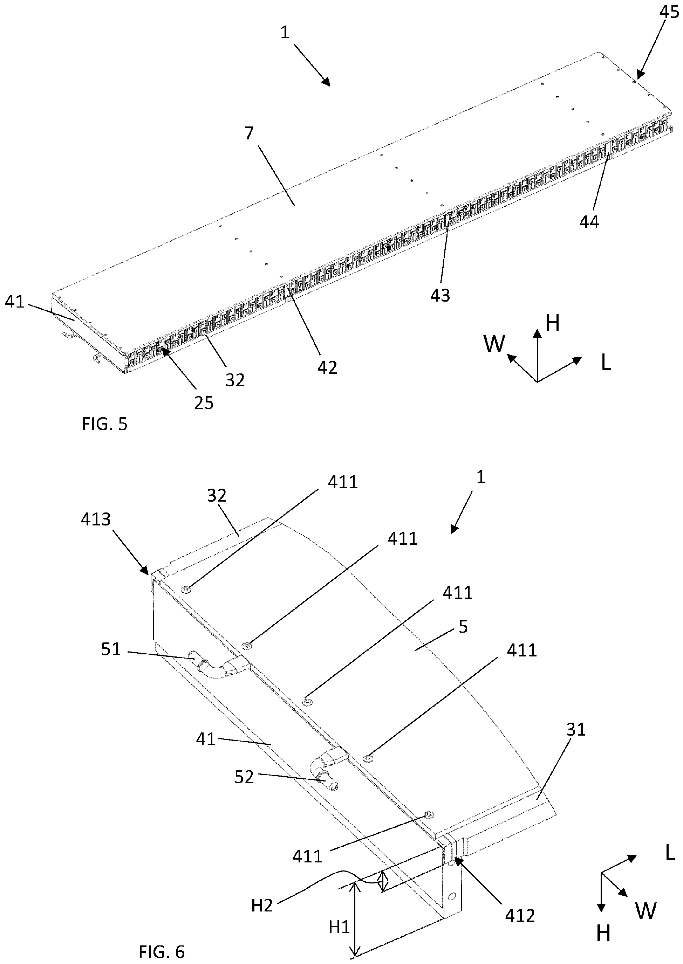

**FIG. 5** is an exemplary battery module 1 in a perspective view according to an example. The battery module 1 in FIG. 5 is based on the battery module shown in FIG. 4. Similar to FIG. 4, FIG. 5 also shows the battery module 1 in perspective view from above.

As depicted in FIG. 5, the battery module 1 may comprise a top cover 7 configured to cover the plurality of battery cells 2 from above, as seen in the height direction H. The top cover 7 may be attached to the plurality of battery cells 2 and/or to the plurality of separate crossbeam members 41, 42, 43, 44, 45 by an adhesive, at least one fastener, and/or a weld. The top cover 7 may further be configured to provide structural rigidity to the battery module 1. For example, the top cover 7 may be made of metal, such as aluminum, or by a polymer, such as a fiber reinforced polymer.

**FIG. 6** is an exemplary battery module 1 in a perspective view according to an example. More specifically, FIG. 6 depicts a perspective view of a portion of a battery module from below. The battery module in FIG. 6 may for example be any one of the battery modules 1 as shown in FIGS 2-5.

As depicted in FIG. 6, the cooling plate bottom member 5 may be mechanically connected to at least one crossbeam member within the plurality of separate crossbeam members 41, 42, 43, 44, 45 by one or more fasteners 411 and/or by one or more welds (not shown) distributed along the width direction W.

As further depicted in FIG. 6, the battery module 1 may have a first maximum height H1 and at least one of the first and second separate longitudinally extending beam members 31 may have a second maximum height H2, as measured in the height direction H, wherein the second maximum height H2 of the at least one of the first and second separate longitudinally extending beam members 31 is lower than the first maximum height H1 of the battery module 1. Thereby, the side terminals 25 may be more easily accessible.

As further depicted in e.g. FIG. 6, the at least one of the first and second separate longitudinally extending beam members 31, 32 is provided proximate the cooling plate bottom member 5. More specifically, in the shown example the at least one of the first and second separate longitudinally extending beam members 31, 32 is provided in abutment with the cooling plate bottom member 5. As further shown, the at least one of the first and second separate longitudinally extending beam members 31, 32 may be attached to a respective corner portion 412, 413 of each crossbeam member 41 within the plurality of crossbeam members 41. Accordingly, the at least one of the first and second separate longitudinally extending beam members 31, 32 may further be attached to the other crossbeam members in a similar manner (not shown). In the shown example, the first and second separate longitudinally extending beam members 31, 32 are welded to the respective corner portion. However, the attachment may additionally or alternatively be made by a fastener, such as a screw or rivet.

As further depicted in e.g. FIG. 6, the at least one of the first and second separate longitudinally extending beam members 31, 32 may be substantially L-formed, as seen in a sectional plane which is perpendicular to the longitudinal direction L. The L-form shape may provide a load bearing support for the at least one group of stacked prismatic battery cells 21, 22, 23, 24. It shall be noted that in addition to the load support by the cooling plate bottom member 5, the first and second separate longitudinally extending beam members 31, 32 may also be configured to form a load bearing surface for the at least one group 21, 22, 23, 24 of stacked prismatic battery cells 2.

At least two of the plurality of separate crossbeam members 41, 42, 43, 44, 45 may be identical. Additionally, or alternatively, the first and second separate longitudinally extending beam members 31, 32 may be identical.

With reference to e.g. FIG. 6, the cooling plate bottom member 5 may comprise a coolant circuit configured to contain a coolant fluid. Hence, the cooling plate bottom member 5 may comprise a fluid inlet 51 and a fluid outlet 52 for coolant fluid. The fluid inlet 51 and/or outlet 52 may as shown be located at an end portion of the battery module 1, as seen in the longitudinal direction L.

The battery module 1 may further comprise a thermal interface material (not shown) between the cooling plate bottom member 5 and the plurality of battery cells 2.

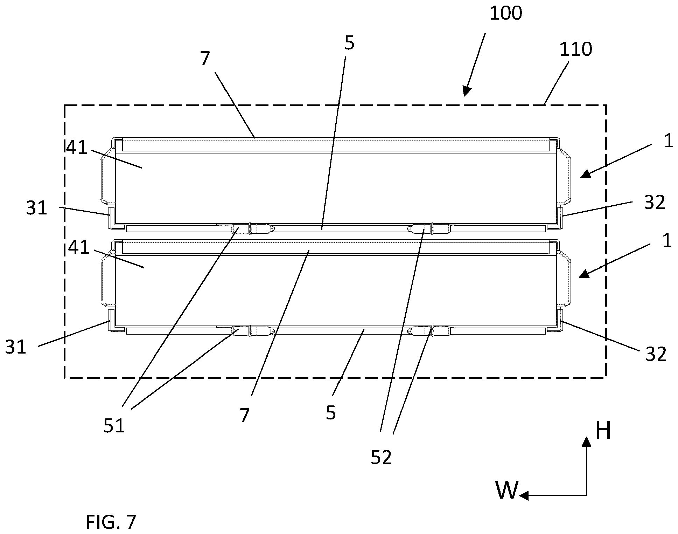

**FIG. 7** is an exemplary battery pack 100 in a side view according to an example. The battery pack 100 comprises one or more battery modules 1 as described herein. In the shown example, the battery pack 100 comprises two such battery modules 1, wherein the two battery modules 1 are arranged on top of each other, as seen in the height direction H.

The battery pack 100 further comprises a housing 110 in which the at least two battery modules 1 are provided.

In the below, possible features and feature combinations of the present disclosure are presented as a list of Examples.

Example 1: A battery module (1) for a battery pack (100), the battery module (1) having a longitudinal extension in a longitudinal direction (L), a width extension in a width direction (W) and a height extension in a height direction (H), the battery module (1) comprising:
- a plurality of battery cells (2), comprising at least one group of stacked prismatic battery cells (21-24) which are stacked next to each other in the longitudinal direction (L),
- a first and a second separate longitudinally extending beam member (31, 32) being offset from each other in the width direction (W),
- a plurality of separate crossbeam members (41-45) which are offset from each other in the longitudinal direction (L), wherein each crossbeam member extends in the width direction (W) and wherein the plurality of separate crossbeam members (41-45) mechanically connects the first and second separate longitudinally extending beam members (31, 32) together,
- a cooling plate bottom member (5), provided at a bottom portion of the first and second separate longitudinally extending beam members (31, 32) and the plurality of separate crossbeam members (41-45), as seen in the height direction (H), wherein the cooling plate bottom member (5) is mechanically connected to the first and second separate longitudinally extending beam members (31, 32) and/or to the plurality of separate crossbeam members (41, 45),

wherein the first and second separate longitudinally extending beam members (31, 32), the plurality of separate crossbeam members (41-45) and the cooling plate bottom member (5) form at least one receiving space (S1-S4) for the at least one group of stacked prismatic battery cells (21-24), and
wherein the at least one group of stacked prismatic battery cells (21-24) are at least partly supported on the cooling plate bottom member (5), forming a load bearing surface for the at least one group of stacked prismatic battery cells (21-24).

Example 2: The battery module (1) according to example 1, wherein the at least one group of stacked prismatic battery cells (21-24) is a group of stacked prismatic side terminal battery cells which are stacked next to each other in the longitudinal direction (L) with side terminals (25) thereof facing in a first direction corresponding to the width direction (W) and/or in a second direction which is opposite to the first direction.

Example 3: The battery module (1) according to any one of the preceding examples, wherein the battery cells of the at least one group of stacked prismatic battery cells (21-24) are fixed to each other by at least one strap (6) which is wrapped around the group of stacked prismatic battery cells (21-24).

Example 4: The battery module (1) according to any one of the preceding examples, wherein the cooling plate bottom member (5) is mechanically connected to at least one crossbeam member within the plurality of separate crossbeam members (41-45) by one or more fasteners (411) and/or by one or more welds distributed along the width direction (W).

Example 5: The battery module (1) according to any one of the preceding examples, wherein the battery module (1) has a first maximum height (H1) and wherein at least one of the first and second separate longitudinally extending beam members (31, 32) has a second maximum height (H2), as measured in the height direction (H), wherein the second maximum height (H2) of the at least one of the first and second separate longitudinally extending beam members (31, 32) is lower than the first maximum height (H1) of the battery module (1).

Example 6: The battery module (1) according to example 5, wherein the at least one of the first and second separate longitudinally extending beam members (31, 32) is provided proximate, such as in abutment with, the cooling plate bottom member (5).

Example 7: The battery module (1) according to example 6, wherein the at least one of the first and second separate longitudinally extending beam members (31, 32) is attached to a respective corner portion (412) of each crossbeam member within the plurality of crossbeam members (41).

Example 8: The battery module (1) according to any one of the preceding examples, comprising more than one group of the at least one group of stacked prismatic battery cells (21-24), wherein the first and second separate longitudinally extending beam members (31, 32), the plurality of separate crossbeam members (41-45) and the cooling plate bottom member (5) form a respective receiving space (S1-S4) for each group of stacked prismatic battery cells (21-24).

Example 9: The battery module (1) according to any one of the preceding examples, wherein at least two of the plurality of separate crossbeam members (41-45) are identical.

Example 10: The battery module (1) according to any one of the preceding examples, wherein the first and second separate longitudinally extending beam members (31, 32) are identical.

Example 11: The battery module (1) according to any one of the preceding examples, wherein the cooling plate bottom member (5) comprises a coolant circuit configured to contain a coolant fluid.

Example 12: The battery module (1) according to any one of the preceding examples, further comprising a top cover (7) configured to cover the plurality of battery cells (2) from above, as seen in the height direction (H).

Example 13: The battery module (1) according to example 12, wherein the top cover (7) is attached to the plurality of battery cells (2) and/or to the plurality of separate crossbeam members (41-45) by an adhesive, at least one fastener, and/or a weld.

Example 14: The battery module (1) according to any one of the preceding examples, further comprising a thermal interface material between the cooling plate bottom member (5) and the plurality of battery cells (2).

Example 15: The battery module (1) according to example 3, wherein the at least one strap (6) is wrapped around an axis which corresponds to the width direction (W).

Example 16: The battery module (1) according to example 11, wherein coolant circuit is fluidly connected to a fluid inlet (51) and a fluid outlet (52) for coolant fluid, wherein optionally the fluid inlet and/or outlet are located at an end portion of the battery module (1), as seen in the longitudinal direction (L).

Example 17: The battery module (1) according to example 12 or 13, wherein the top cover (7) is configured to provide structural rigidity to the battery module (1).

Example 18: A battery pack (100) comprising one or more battery modules (1) according to any one of the preceding examples.

Example 19: The battery pack (100) according to example 18, comprising at least two battery modules according to any one of examples 1-17, wherein the at least two battery modules (1) are arranged on top of each other, as seen in the height direction (H).

Example 20: A vehicle (200) comprising a battery module (1) according to any one of examples 1-17 and/or a battery pack (100) according to any one of examples 18-19.

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery module (1) for a battery pack (100), the battery module (1) having a longitudinal extension in a longitudinal direction (L), a width extension in a width direction (W) and a height extension in a height direction (H), the battery module (1) comprising:
- a plurality of battery cells (2), comprising at least one group of stacked prismatic battery cells (21-24) which are stacked next to each other in the longitudinal direction (L),
- a first and a second separate longitudinally extending beam member (31, 32) being offset from each other in the width direction (W),
- a plurality of separate crossbeam members (41-45) which are offset from each other in the longitudinal direction (L), wherein each crossbeam member extends in the width direction (W) and wherein the plurality of separate crossbeam members (41-45) mechanically connects the first and second separate longitudinally extending beam members (31, 32) together,
- a cooling plate bottom member (5), provided at a bottom portion of the first and second separate longitudinally extending beam members (31, 32) and the plurality of separate crossbeam members (41-45), as seen in the height direction (H), wherein the cooling plate bottom member (5) is mechanically connected to the first and second separate longitudinally extending beam members (31, 32) and/or to the plurality of separate crossbeam members (41, 45),
wherein the first and second separate longitudinally extending beam members (31, 32), the plurality of separate crossbeam members (41-45) and the cooling plate bottom member (5) form at least one receiving space (S1-S4) for the at least one group of stacked prismatic battery cells (21-24), and
wherein the at least one group of stacked prismatic battery cells (21-24) are at least partly supported on the cooling plate bottom member (5), forming a load bearing surface for the at least one group of stacked prismatic battery cells (21-24).

2. The battery module (1) according to claim 1, wherein the at least one group of stacked prismatic battery cells (21-24) is a group of stacked prismatic side terminal battery cells which are stacked next to each other in the longitudinal direction (L) with side terminals (25) thereof facing in a first direction corresponding to the width direction (W) and/or in a second direction which is opposite to the first direction.

3. The battery module (1) according to any one of the preceding claims, wherein the battery cells of the at least one group of stacked prismatic battery cells (21-24) are fixed to each other by at least one strap (6) which is wrapped around the group of stacked prismatic battery cells (21-24).

4. The battery module (1) according to any one of the preceding claims, wherein the cooling plate bottom member (5) is mechanically connected to at least one crossbeam member within the plurality of separate crossbeam members (41-45) by one or more fasteners (411) and/or by one or more welds distributed along the width direction (W).

5. The battery module (1) according to any one of the preceding claims, wherein the battery module (1) has a first maximum height (H1) and wherein at least one of the first and second separate longitudinally extending beam members (31, 32) has a second maximum height (H2), as measured in the height direction (H), wherein the second maximum height (H2) of the at least one of the first and second separate longitudinally extending beam members (31, 32) is lower than the first maximum height (H1) of the battery module (1).

6. The battery module (1) according to claim 5, wherein the at least one of the first and second separate longitudinally extending beam members (31, 32) is provided proximate, such as in abutment with, the cooling plate bottom member (5).

7. The battery module (1) according to claim 6, wherein the at least one of the first and second separate longitudinally extending beam members (31, 32) is attached to a respective corner portion (412) of each crossbeam member within the plurality of crossbeam members (41).

8. The battery module (1) according to any one of the preceding claims, comprising more than one group of the at least one group of stacked prismatic battery cells (21-24), wherein the first and second separate longitudinally extending beam members (31, 32), the plurality of separate crossbeam members (41-45) and the cooling plate bottom member (5) form a respective receiving space (S1-S4) for each group of stacked prismatic battery cells (21-24).

9. The battery module (1) according to any one of the preceding claims, wherein at least two of the plurality of separate crossbeam members (41-45) are identical.

10. The battery module (1) according to any one of the preceding claims, wherein the first and second separate longitudinally extending beam members (31, 32) are identical.

11. The battery module (1) according to any one of the preceding claims, wherein the cooling plate bottom member (5) comprises a coolant circuit configured to contain a coolant fluid.

12. The battery module (1) according to any one of the preceding claims, further comprising a top cover (7) configured to cover the plurality of battery cells (2) from above, as seen in the height direction (H).

13. A battery pack (100) comprising one or more battery modules (1) according to any one of the preceding claims.

14. The battery pack (100) according to claim 13, comprising at least two battery modules according to any one of claims 1-12, wherein the at least two battery modules (1) are arranged on top of each other, as seen in the height direction (H).

15. A vehicle (200) comprising a battery module (1) according to any one of claims 1-12 and/or a battery pack (100) according to any one of claims 13-14.
